# EUROPÄISCHE PATENTSCHRIFT

(11) **EP 2 180 988 B1**
(45) Veröffentlichungstag und Bekanntmachung des Hinweises auf die Patenterteilung: **07.12.2011**
(21) Anmeldenummer: 08785729.8
(22) Anmeldetag: 27.08.2008
(51) Int. Cl.: B29B 17/00, C08L 19/00, B29C 35/04

(54) **VERFAHREN ZUM HERSTELLEN VON GUMMIPLATTEN, GUMMIMATTEN ODER DERGLEICHEN GUMMIPRODUKTEN AUS GUMMIGRANULAT**
PROCESS FOR PRODUCING RUBBER SHEETS, RUBBER MATS OR SIMILAR RUBBER PRODUCTS FROM RUBBER GRANULES
PROCÉDÉ POUR PRODUIRE DES PLAQUES, TAPIS OU AUTRES PRODUITS EN CAOUTCHOUC À PARTIR DE GRANULÉS DE CAOUTCHOUC

(30) Priorität: 27.08.2007 DE 102007040614
(43) Veröffentlichungstag der Anmeldung: 05.05.2010
(73) Patentinhaber: Siempelkamp Maschinen- und Anlagenbau GmbH & Co.KG, 47803 Krefeld (DE)
(72) Erfinder: HÜNEKE, Jörg, Heinz, 47798 Krefeld (DE); SCHÖLER, Michael, 47509 Rheurdt (DE)
(74) Vertreter: von dem Borne, Andreas
(86) Internationale Anmeldenummer: PCT/EP2008/007031
(87) Internationale Veröffentlichungsnummer: WO 2009/027083

(56) Entgegenhaltungen:
- DE-A1- 3 017 899
- DE-A1- 4 113 056
- JP-A- 2005 074 780

## Beschreibung

Die Erfindung betrifft ein Verfahren zum Herstellen von Gummiplatten, Gummimatten oder dergleichen Gummiprodukten aus Gummigranulat in einer Presse. Gummigranulat meint im Rahmen der Erfindung auch Gummipulver oder dergleichen und vorzugsweise ein rieselfähiges bzw. streufähiges Recyclat aus Altreifen-Gummi.

Altreifen-Gummi bzw. Altreifen fallen in stark zunehmender Menge als Abfallstoffe an. Die Verwertung dieser Abfallstoffe ist häufig problematisch. Grundsätzlich kommt eine energetische Verwertung, z. B. durch Verbrennung im Zuge der Zementherstellung in Frage. Insbesondere aufgrund gesetzlicher Vorschriften wird jedoch zunehmend eine Wiederverwertung gefordert. Dabei ist es bekannt, aus Altreifen Granulate bzw. Pulver oder Mehle herzustellen. Diese können beispielsweise als Füllstoff in der Kautschukindustrie eingesetzt werden. Es ist jedoch auch bekannt, aus derartigem Gummigranulat in Formpressen Formteile und Matten bzw. Sportböden und Fallschutzmatten herzustellen.

So kennt man beispielsweise aus der DE 30 17 899 A ein Verfahren zur Herstellung von PUR-gebundenen Gummigranulatmatten, wobei Gummigranulat aus z. B. Altreifen als Hauptbestandteil sowie ein Bindemittel auf Polyurethanbasis samt Katalysator sowie weitere Hilfs- und Zusatzstoffe unter Druck und Wärme verformt werden, und zwar in einer kontinuierlichen Presse. Dabei werden Bandgeschwindigkeiten von 6 bis 8 m pro Minute, Drücke zwischen 1 und 3 bar sowie Temperaturen von 120 bis 140 °C gewählt. Beim Eintritt des mattenbildenden Gemisches in die Bandformmaschine kann zur Beschleunigung der Aushärtung Wasserdampf eingeblasen werden.

Eine weiteres Verfahren zur Wiederverwendung von Altgummi, wobei ein Bindemittel in das Gummigranulat eingemischt wird und vor dem Pressen Wasserdampf in das Mischgut eingeblasen wird, ist in der DE 41 13 056 offenbart.

Die DE 30 17 899 und die DE 41 13 056 offenbaren die folgenden Schritte für ein Verfahren zum Herstellen von Gummiplatten, Gummimatten oder dergleichen Gummiprodukten aus Gummigranulat bzw. Altreifen-Gummigranulat:
- das Gummigranulat wird zumindest mit einem Bindemittel beleimt und aus dem beleimten Granulat eine Pressgutmatte erzeugt,
- die Presgutmatte wird mit Wasserdampf als Reaktionsbeschleuniger behandelt,
- die Pressgutmatte wird in eine Presse eingeführt und in der Presse mittels Druck und Wärme unter Aushärtung des Bindemittels zu einer Gummiplatte verpresst.

Nachteilig bei den bekannten Verfahren zur Herstellung von Gummiplatten, Gummimatten oder dergleichen aus Altreifen-Gummigranulat ist die Tatsache, dass häufig sehr lange Presszyklen benötigt werden. Dieses hängt mit der sehr schlechten Wärmeleitfähigkeit von Gummi zusammen. Übliche Heizzeitfaktoren für plattenförmige Gummi-Werkstoffe liegen bei 60 sec. pro mm Produktdicke. Für dickere Produkte sind Durchwärmzeiten von mehreren Stunden erforderlich. Damit ist die Fertigung verschiedenster Produkte aus Altreifen-Gummigranulat häufig unwirtschaftlich. Hier setzt die Erfindung ein.

Der Erfindung liegt die Aufgabe zugrunde, ein Verfahren zum Herstellen von Gummiplatten, Gummimatten oder dergleichen Gummiprodukten aus Gummigranulat, vorzugsweise aus Altreifen-Gummigranulat, in einer Presse so zu verbessern, dass es sich durch kurze Fertigungszeiten und folglich hohe Wirtschaftlichkeit auszeichnet.

Zur Lösung dieser Aufgabe lehrt die Erfindung ein Verfahren zum Herstellen von Gummiplatten, Gummimatten oder dergleichen Gummiprodukten aus Gummigranulat, vorzugsweise aus Altreifen-Gummigranulat, in einer Presse,
- wobei das Gummigranulat mit zumindest einem Bindemittel beleimt wird und aus dem beleimten Granulat eine Pressgutmatte erzeugt wird,
- wobei zumindest in einer oberflächennahen Deckschicht eine gegenüber einer im Innern der Matte angeordneten Mittelschicht erhöhte Feuchte eingestellt wird, wobei der Wassergehalt in einer oder mehreren Deckschichten 10 % bis 50 % und in zumindest einer Mittelschicht weniger als 10 % jeweils bezogen auf das Gewicht) beträgt,
- wobei die ein über die Mattendicke inhomogenes Feuchteprofil aufweisende Pressgutmatte in eine Presse eingeführt und in der Presse mittels Druck und Wärme unterAushärtung des Bindemittels zu einer Gummiplatte verpresst wird.

Bei dem Bindemittel handelt es sich vorzugsweise um Isocyanat bzw. um ein isocyanathaltiges Bindemittel.

Damit geht die Erfindung von der Erkenntnis aus, dass sich Gummiplatten bzw. -matten mit besonders kurzen Presszeiten und folglich in besonders wirtschaftlicher Weise herstellen lassen, wenn die Deckschicht bzw. die Deckschichten eine gegenüber der Mittelschicht erhöhte Feuchtigkeit aufweisen. Denn das Wasser in den feuchten Deckschichten verdampft im Zuge der Erhitzung, z. B. bei Kontakt mit den heißen Pressplatten, so dass in den Deckschichten Dampf erzeugt wird, welcher rasch in die weniger feuchte Mittelschicht bzw. die Mittelschichten gelangt. Damit gelingt im Rahmen der Erfindung nicht nur eine schnelle Aufheizung und folglich Aushärtung der Deckschichten, sondern durch den schnellen Wärmetransport in die Mittelschicht über den Dampf wird auch die Mittelschicht schnell aufgeheizt, so dass dort die Aushärtung des Bindemittels ebenfalls sehr schnell erfolgt. Dieser auch als "Dampfstoß-Effekt" bezeichnete Effekt ist bereits im Zuge des Verpressens von Holzwerkstoffen zu Holzwerkstoffplatten, z. B. Spanplatten, Faserplatten oder dergleichen, beobachtet worden. Überraschenderweise lässt sich nun durch eine geeignete Feuchte der Deckschichten auch die Herstellung von Gummiplatten, Gummimatten oder dergleichen optimieren. Von besonderer Bedeutung ist dabei die Tatsache, dass das Gummigranulat bzw. deren Oberflächen nicht durch Hitze angeschmolzen werden müssen, um einen einwandfreien Verbund zu gewährleisten. Es reicht vielmehr vollkommen aus, durch den die Matte durchdringenden Dampf den auf den Oberflächen anhaftenden Leim zu erwärmen, so dass es zur Aushärtung kommen kann. Insofern ist für den Verbund der Platte auch kein besonders hoher Druck erforderlich. Der in die Presse eingebrachte Druck soll insbesondere den Wärmetransfer optimieren, wobei hohe Drücke mit Material feiner Körnung in der Regel zu hohen Oberflächenqualitäten führen.

Die Feuchte kann auf unterschiedlichste Weise erzeugt bzw. eingebracht werden. Zunächst einmal besteht die Möglichkeit, das inhomogene Feuchteprofil durch beleimtes Gummigranulat mit unterschiedlicher Feuchte einzustellen. Es kann folglich eine mehrschichtige, z. B. dreischichtige Streugutmatte gestreut werden, wobei für die Deckschichten Gummigranulat mit hoher Feuchte verwendet wird, während für die Mittelschicht Gummigranulat mit sehr niedriger Feuchte verwendet wird. Deckschichten und Mittelschichten sind nicht auf einen dreischichtigen Aufbau beschränkt. Es können auch mehrere Deckschichten und mehrere Mittelschichten vorgesehen sein. Im Übrigen besteht im Zusammenhang mit einem mehrschichtigen Aufbau auch die Möglichkeit, Gummigranulat unterschiedlicher Körnung für die verschiedenen Schichten einzusetzen. Ferner kann Gummigranulat mit unterschiedlicher Dichte für die verschiedenen Schichten eingesetzt werden.

Sofern ein einschichtiger Aufbau gewählt wird oder bei einem mehrschichtigen Aufbau eine Streugutmatte mit homogener Feuchte eingesetzt wird, besteht alternativ die Möglichkeit, die gewünschte Reaktionsfeuchte durch Zuführung von Feuchtigkeit bzw. durch Oberflächenbefeuchtung einzustellen. Dazu kann beispielsweise vor Eintritt in die Presse Dampf in die Streugutmatte eingeblasen werden. Dampf meint im Rahmen der Erfindung auch ein Dampf-/Luftgemisch. Grundsätzlich kommt auch eine Sprühbefeuchtung oder dergleichen in Betracht.

Jedenfalls ist es nach bevorzugter Ausführungsform der Erfindung zweckmäßig, wenn der Wassergehalt in der Deckschicht bzw. den Deckschichten 10 % bis 50 %, vorzugsweise 20 % bis 30 %, und zwar jeweils bezogen auf das Gewicht, beträgt. Demgegenüber sollte die Mittelschicht bzw. sollten die Mittelschichten trocken ausgestaltet sein. Der Wassergehalt sollte in jedem Fall niedriger sein, als in den Deckschichten, da der erläuterte Dampfstoßeffekt größer ist, wenn mit einem besonders hohen Feuchtegefälle von den Deckschichten zu der Mittelschicht gearbeitet wird. Darüber hinaus wird der Dampfstoßeffekt vergrößert, wenn mit hohen Temperaturdifferenzen von der Deckschicht in Richtung der Mittelschicht gearbeitet wird. Insofern ist es zweckmäßig, wenn der Wassergehalt in der Mittelschicht bzw. den Mittelschichten weniger als 10 %, vorzugsweise weniger als 5 %, z. B. weniger als 1 % beträgt.

Besonders bevorzugt wird die Pressgutmatte in einer kontinuierlichen Presse verpresst, so dass die Herstellung kontinuierlich und folglich besonders wirtschaftlich erfolgen kann. Kontinuierliche Pressen sind zur Herstellung nicht nur von Gummiplatten, Gummimatten oder dergleichen, sondern insbesondere auch zur Herstellung von Holzwerkstoffplatten bekannt. Sie bestehen in ihrem grundsätzlichen Aufbau üblicherweise aus einem Pressenoberteil mit oberer Heizplatte und einem Pressenunterteil mit unterer Heizplatte sowie im Pressenoberteil und im Pressenunterteil jeweils umlaufenden endlosen Pressbändem, z. B. Stahlpressbändern. Diese endlosen Pressbänder sind über Umlenkwalzen geführt. Sie stützen sich unter Zwischenschaltung von Wälzkörperaggregaten, z. B. Rollstangen, gegen die beheizten Pressenplatten ab.

Die Erfindung umfasst jedoch auch Ausführungsformen, bei welchen die Pressgutmatten in Taktpressen verpresst werden. Insoweit kann es sich um Etagenpressen, z. B. Einetagenpressen oder Mehretagenpressen handeln.

Vorzugsweise werden die Pressgutmatten zumindest zeitweise mit einem Pressdruck von 10 bar bis 60 bar, z. B. 20 bar bis 50 bar verpresst. Innerhalb der Presse werden vorzugsweise Temperaturen von 150 °C bis 200 °C, z. B. 160 °C bis 180 °C eingestellt.

Als Bindemittel werden vorzugsweise Isocyanate eingesetzt. Dabei kann es sich um übliche bekannte Isocyanate handeln. Im Falle einer mehrschichtigen Streugutmatte schlägt die Erfindung vor, dass in der Deckschicht bzw. den Deckschichten einerseits und in der Mittelschicht bzw. den Mittelschichten andererseits unterschiedliche Isocyanate bzw. Bindemittel verwendet werden. So ist es zweckmäßig, wenn das in der Mittelschicht verwendete Isocyanat eine gegenüber dem in der Deckschicht verwendeten Isocyanat erhöhte Reaktivität besitzt. Insoweit kann es sich bei dem schnellen Isocyanat um ein Zweikomponenten-Isocyanat mit Polyol handeln. Dabei geht die Erfindung von der Erkenntnis aus, dass grundsätzlich bereits übliches Isocyanat bei entsprechender Wärmebehandlung aushärtet. Ferner geht die Erfindung von der Erkenntnis aus, dass durch Zusatz von Wasser das Aushärten beschleunigt werden kann. Da insbesondere das Aushärten in den Mittelschichten häufig problematisch ist, ist es zweckmäßig, in der Mittelschicht darüber hinaus Polyol oder dergleichen einzusetzen, um die Reaktivität und damit die Aushärtung weiter zu verbessern.

Insgesamt gelingt im Rahmen der Erfindung eine besonders schnelle Verpressung der Gummigranulatmatten. Durch Einsatz eines (beschleunigten) Isocyanates, welches bereits bei Temperaturen unter 100 °C, z. B. bei Temperaturen zwischen 85 °C und 90 °C aushärtet, besteht im Übrigen die Möglichkeit, dass die Mittelschicht nicht auf Temperaturen über 100 °C erhitzt werden muss. Dieses hat - neben dem Zeitfaktor - den Vorteil, dass in der Mittelschicht kein weiterer Dampf erzeugt wird, so dass auch kein nennenswerter Dampfdruck aufgebaut wird und damit die Gefahr von "Platzern" in der Mittelschicht minimiert wird. Im Rahmen der Erfindung wird Dampf in erster Linie in den Deckschichten erzeugt, welcher dann in die Mittelschicht eindringt und dort unter Erwärmung der Mittelschicht kondensiert. Da Gummi - im Gegensatz zu Holzwerkstoffen - kein Quellverhalten zeigt, stört es auch nicht, wenn Wasser in gewissen Mengen im Platteninnem verbleibt.

Die Herstellung einer erfindungsgemäßen Gummigranulatplatte oder -matte kann beispielsweise wie folgt erfolgen:

Zunächst wird das aus Altreifen hergestellte Gummigranulat in einem Mischer oder dergleichen mit dem Bindemittel, z. B. Isocyanat, beleimt. Anlagentechnisch kann hier auf übliche Mischer aus der Holzwerkstoffplattenindustrie zurückgegriffen werden. Diese Mischung wird mit einer geeigneten Streuvorrichtung zu einer Streugutmatte gestreut. Für einen dreischichtigen Aufbau wird einerseits Gummigranulat mit einem Standardisocyanat und andererseits Gummigranulat mit einem schnellen Isocyanat hoher Reaktivität beleimt. Aus diesen beiden Mischungen wird eine mehrschichtige, z. B. dreischichtige Streugutmatte erzeugt, wobei die Mischung mit schnellem Isocyanat für die Mittelschicht verwendet wird, während die mit Standardisocyanat beleimten Granulate für die beiden Deckschichten verwendet werden. Dabei wird vor oder auch nach dem Streuen in den Deckschichten eine Deckschichtfeuchte von 25 Gew.% Wasseranteil erzeugt, während die Feuchtigkeit in der Mittelschicht in etwa 0 % beträgt. Die insoweit erzeugte Pressgutmatte wird in eine kontinuierlich arbeitende Presse eingeführt. Dort wird die Matte bei Temperaturen von 160 bis 180 °C und einem Druck von 20 bis 50 bar verpresst. Auf diese Weise lassen sich Heizzeitfaktoren von 6 bis 10 sec. pro mm erzeugen. Die Dicke der erzeugten Platte beträgt im Ausführungsbeispiel 5 mm bis 60 mm. Größere Dicken sind möglich. Die Dichte lässt sich über den angelegten Pressdruck im Bereich von etwa 600 bis 1000 kg/m² einstellen. Dabei gelingt ein Pressen der Platte in etwa 3 bis 4 Minuten.

Die erfindungsgemäß erzeugten Platten, Matten oder dergleichen lassen sich vielfältig einsetzen, z. B. als Bodenbelag für Sport- und Spielplätze, Containerböden, Fallschutzmatten, Hallenböden, Straßen- und Gehwegbeläge.

## Patentansprüche

1. Verfahren zum Herstellen von Gummiplatten, Gummimatten oder dergleichen Gummiprodukten aus Gummigranulat, vorzugsweise aus Altreffen-Gummigranulat, in einer Presse,
wobei das Gummigranulat mit zumindest einem Bindemittel beleimt wird und aus dem beleimten Granulat eine Pressgutmatte erzeugt wird,
wobei zumindest in einer oberflächennahen Deckschicht eine gegenüber einer im Innern der Matte angeordneten Mittelschicht erhöhte Feuchte eingestellt wird, wobei der Wassergehalt in einer oder mehreren Deckschichten 10 % bis 50 % und in zumindest einer Mittelschicht weniger als 10 % (jeweils bezogen auf das Gewicht) beträgt,
wobei die ein über die Mattendicke inhomogenes Feuchteprofil aufweisende Pressgutmatte in eine Presse eingeführt und in der Presse mittels Druck und Wärme unter Aushärtung des Bindemittels zu einer Gummiplatte verpresst wird.

2. Verfahren nach Anspruch 1, **dadurch gekennzeichnet, dass** zur Erzeugung des Feuchteprofils beleimtes Gummigranulat mit unterschiedlicher Feuchte verwendet wird.

3. Verfahren nach Anspruch 1, **dadurch gekennzeichnet, dass** zur Erzeugung des Feuchteprofils in eine erzeugte Streugutmatte Feuchtigkeit, z. B, Dampf, eingebracht, z. B. eingeblasen wird.

4. Verfahren nach einem der Ansprüche 1 bis 3, **dadurch gekennzeichnet, dass** der Wassergehalt in einer oder mehreren Deckschichten 20 % bis 30 % (bezogen auf das Gewicht) beträgt.

5. Verfahren nach einem der Ansprüche 1 bis 4, **dadurch gekennzeichnet, dass** der Wassergehalt in einer Mittelschicht oder in mehreren Mittelschichten weniger als 5 %, z. B. weniger als 1 % beträgt.

6. Verfahren nach einem der Ansprüche 1 bis 5, **dadurch gekennzeichnet, dass** die Pressgutmatte zumindest zeitweise mit einem Pressdruck von 10 bis 60 bar, vorzugsweise 20 bis 50 bar verpresst wird.

7. Verfahren nach einem der Ansprüche 1 bis 6, **dadurch gekennzeichnet, dass** die Pressgutmatte zumindest zeitweise mit einer Temperatur von 150 °C bis 200 °C, vorzugsweise 160 °C bis 180 °C verpresst wird.

8. Verfahren nach einem der Ansprüche 1 bis 7, **dadurch gekennzeichnet, dass** als Bindemittel Isocyanat verwendet wird bzw. das Bindemittel Isocyanat enthält.

9. Verfahren nach Anspruch 8, **dadurch gekennzeichnet, dass** im Falle einer mehrschichtigen Streugutmatte in der Deckschicht bzw. den Deckschichten ein erstes Isocyanat bzw. isocyanathaltiges Bindemittel und in der Mittelschicht bzw. den Mittelschichten ein zweites Isocyanat bzw. isocyanathaltiges Bindemittel verwendet wird, wobei das zweite Bindemittel, z. B. durch Zusatz von Polyol, eine höhere Reaktivität (Reaktionsgeschwindigkeit) als das erste Bindemittel aufweist

10. Verfahren nach einem der Ansprüche 1 bis 9, **dadurch gekennzeichnet, dass** eine mehrschichtige Streugutmatte erzeugt wird, wobei einzelne Schichten der Streugutmatte unterschiedliche Dichte und/oder unterschiedliche Feuchte und/oder unterschiedliche Korngröße des Granulats und/oder unterschiedliche Bindemittel aufweisen.

11. Verfahren nach einem der Ansprüche 1 bis 10, **dadurch gekennzeichnet, dass** die Streugutmatte in einer kontinuierlichen Presse verpresst wird.

12. Verfahren nach einem der Ansprüche 1 bis 10, **dadurch gekennzeichnet, dass** die Streugutmatte in einer Taktpresse, z. B. Etagenpresse, verpresst wird.

## Claims

1. A method for the manufacture of rubber sheets, rubber mats or similar rubber products from a rubber granulate, preferably from a rubber granulate from scrap tyres, in a press
wherein the rubber granulate is glued with at least one binding agent, and a press material mat is generated from the glued granulate,
wherein the moisture level in at least one top layer near the surface is adjusted to be higher than in a central layer arranged in the interior of the mat,
wherein the water content in one or a plurality of top layers amounts to 10 % to 50 %, and in at least one central layer to less than 10 % (in each case by weight), wherein
the press material mat, having a non-homogeneous moisture profile over the thickness of the mat, is introduced into a press, and in the press is pressed into the form a rubber sheet with hardening of the binding agent by means of pressure and heat.

2. The method in accordance with Claim 1,
**characterised in that** glued rubber granulate with differing moisture levels is used to generate the moisture profile.

3. The method in accordance with Claim 1,
**characterised in that** moisture, e.g. steam, is introduced, e.g. injected, into a generated particulate material mat to generate the moisture profile.

4. The method in accordance with one of the Claims 1 to 3,
**characterised in that** the water content in one or a plurality of top layers amounts to 20 % to 30 % (by weight).

5. The method in accordance with one of the Claims 1 to 4,
**characterised in that** the water content in one central layer or a plurality of central layers is less than 5 %, e.g. less than 1 %.

6. The method in accordance with one of the Claims 1 to 5,
**characterised in that** the press material mat is pressed, at least temporarily, at a pressure of 10 to 60 bar, preferably 20 to 50 bar.

7. The method in accordance with one of the Claims 1 to 6,
**characterised in that** the press material mat is press, at least temporarily, at a temperature of 150° C to 200° C, preferably 160° C to 180° C.

8. The method in accordance with one of the Claims 1 to 7,
**characterised in that** isocyanate is used as the binding agent, or **in that** the binding agent contains isocyanate.

9. The method in accordance with Claim 8,
**characterised in that** in the case of a multi-layer particulate material mat a first isocyanate binding agent, or a binding agent containing isocyanate, is used in the top layer or layers, and a second isocyanate binding agent, or a binding agent containing isocyanate, is used in the central layer or layers, wherein
the second binding agent, e.g. by the addition of polyol, has a higher reactivity (reaction rate) than the first binding agent.

10. The method in accordance with one of the Claims 1 to 9,
**characterised in that** a multi-layer particulate material mat is generated, wherein individual layers of the particulate material mat have differing densities, and/or differing moisture levels, and/or differing granulate sizes, and/or differing binding agents.

11. The method in accordance with one of the Claims 1 to 10,
**characterised in that** the particulate material mat is pressed in a continuous press.

12. The method in accordance with one of the Claims 1 to 10,
**characterised in that** the particulate material mat is pressed in a cycle press, e.g. a multi-platen press.

## Revendications

1. Procédé de fabrication de plaques en caoutchouc, tapis en caoutchouc ou produits en caoutchouc similaires à partir de granulés de caoutchouc, de préférence de granulés de caoutchouc provenant de vieux pneus, dans une presse,
les granulés de caoutchouc étant enduits d'au moins un liant et un tapis pressé étant fabriqué à partir du granulat enduit,
une humidité supérieure à celle d'une couche centrale disposée à l'intérieur du tapis étant établie dans au moins une surface de couverture proche de la surface, la teneur en eau allant jusqu'à 10 à 50 % dans une ou plusieurs couches de couverture et s'élevant à moins de 10 % dans au moins une couche centrale (respectivement par rapport au poids),
le tapis pressé présentant un profil d'humidité inhomogène dans l'épaisseur du tapis étant introduit dans une presse et compressé en une plaque de caoutchouc dans la presse par pression et chaleur tandis que le liant durcit.

2. Procédé selon la revendication 1, **caractérisé en ce que**, pour établir le profil d'humidité, on utilise des granulés de caoutchouc d'humidité différente.

3. Procédé selon la revendication 1, **caractérisé en ce que**, pour établir le profil d'humidité, on introduit ou par exemple on souffle de l'humidité, par exemple de la vapeur, dans un tapis fabriqué en matériau épandu.

4. Procédé selon une des revendications 1 à 3, **caractérisé en ce que** la teneur en eau va de 20 % à 30 % (par rapport au poids) dans une ou plusieurs couches de couverture.

5. Procédé selon une des revendications 1 à 4, **caractérisé en ce que** la teneur en eau est inférieure à 5 %, par exemple inférieure à 1 % (par rapport au poids) dans une couche centrale ou plusieurs couches centrales.

6. Procédé selon une des revendications 1 à 5, **caractérisé en ce que** le tapis en matériau pressé est compressé au moins temporairement avec une force de compression de 10 à 60 bars, de préférence 20 à 50 bars.

7. Procédé selon une des revendications 1 à 6, **caractérisé en ce que** le tapis en matériau pressé est compressé au moins temporairement à une température de 150° C à 200° C, de préférence 160° C à 180° C.

8. Procédé selon une des revendications 1 à 7, **caractérisé en ce qu'**on utilise comme liant de l'isocyanate ou que le liant contient de l'isocyanate.

9. Procédé selon la revendication 8, **caractérisé en ce que**, dans le cas d'un matériau épandu feuilleté, on utilise dans la couche de couverture ou les couches de couverture un premier isocyanate ou liant contenant de l'isocyanate et dans la couche centrale ou les couches centrales un second isocyanate ou liant contenant de l'isocyanate, le second liant présentant une réactivité (vitesse de réaction) supérieure à celle du premier liant par exemple suite à un ajout de polyol.

10. Procédé selon une des revendications 1 à 9, **caractérisé en ce qu'**un tapis en matériau épandu feuilleté est fabriqué, des couches distinctes du tapis en matériau épandu présentant une densité différente et/ou une humidité différente et/ou une granulométrie différente des granulés et/ou des liants différents.

11. Procédé selon une des revendications 1 à 10, **caractérisé en ce que** le tapis en matériau épandu est compressé dans une presse continue.

12. Procédé selon une des revendications 1 à 10, **caractérisé en ce que** le tapis en matériau épandu est compressé dans une presse cadencée, par exemple une presse à étages.
